# EUROPÄISCHE PATENTSCHRIFT

(11) **EP 3 762 686 B1**
(45) Veröffentlichungstag und Bekanntmachung des Hinweises auf die Patenterteilung: **11.05.2022**
(21) Anmeldenummer: 19712907.5
(22) Anmeldetag: 06.03.2019
(51) Int. Cl.: G01F 1/66, G01F 5/00, G01F 7/00, G01F 15/14, G01F 15/18

(54) **FLUIDDURCHFLUSSMESSER**
FLUID FLOW METER
DÉBITMÈTRE D'ÉCOULEMENT FLUIDE

(30) Priorität: 08.03.2018 EP 18160630
(43) Veröffentlichungstag der Anmeldung: 13.01.2021
(73) Patentinhaber: Energoflow AG, 4600 Olten (CH)
(72) Erfinder: STETSENKO, Andrii, Kharkov, 61051 (UA); GLOVA, Iurii, Kharkov, 61204 (UA); NEDZELSKYI, Sergii, Kharkov, 61057 (UA)
(74) Vertreter: Jeck, Anton
(86) Internationale Anmeldenummer: PCT/EP2019/055600
(87) Internationale Veröffentlichungsnummer: WO 2019/170767

(56) Entgegenhaltungen:
- WO-A1-2008/033035
- WO-A1-2015/004254
- US-A- 5 433 117
- US-A1- 2003 167 836
- US-A1- 2015 377 691
- US-A1- 2016 282 164

## Beschreibung

Die Erfindung bezieht sich auf Fluiddurchflussmesser nach dem Oberbegriff des Anspruchs 1 und eine zugehörige Verwendung nach Anspruch 6. Solche Durchflussmesser/Zähler sind zur Durchflussmengenmessung und

Fluidgeschwindigkeitsmessung des über ihren Innenraum fließenden Fluids in einem breiten Durchflussbereich vorgesehen.

Bekannte Fluidmessverfahren haben eingeschränkte Durchflussbereiche. Die Durchflussbereichsverhältnisse zwischen dem Verfahren des variablen Druckgefälles und dem Coriolis-Verfahren betragen in der Regel 1:10. Das Minimal-Maximal-Durchflussverhältnis beim Hitzdraht-Messverfahren beträgt 1:15. Beim Turbinen- und Wirbel-Durchflussmessverfahren beträgt das Verhältnis 1:20, beim Rotationsverfahren liegt es bei 1:100. Beim Ultraschallverfahren kann dieses Verhältnis 1:150 betragen.

Soll der Flüssigkeits- und Gasdurchfluss in einem größeren Messbereich gemessen werden, muss man mehrere Durchflussmesser in verschiedenen Baugrößen und mit unterschiedlichen Verläufen der Strömungsmessungen anwenden. Das erschwert wesentlich die Konstruktion der Erfassungsbaugruppe, vergrößert ihre Abmessungen und benötigt viel Zeit für die Wartung und das Umrüsten.

Bei bekannten Vorrichtungen für die Messbereichserweiterung handelt es sich um Zähler, deren Gehäuse einen oder mehrere Massenmesser enthält, wie beispielsweise in den Druckschriften EP2824432 A2 und CN104061973A beschrieben. Der Durchflussbereich der Gesamtströmung bei solchen Zählern hängt von der Anzahl und der Baugröße der im Gehäuse eingebauten Massenmesser ab. Diese technische Lösung weist jedoch eine äußerst komplizierte Bauweise auf und ist wegen zahlreicher Strömungswächter technisch aufwendig. Die Strömungswächter sind erforderlich, um große Durchflussmengen zu messen. Somit hat diese technische Lösung gewisse Einschränkungen hinsichtlich der Anwendung als kleiner (Haushalts-) Zähler. Ein weiterer Mangel bekannter Vorrichtungen ist die begrenzte "innere Skalierbarkeit" der Strömungswächter. Sie müssen für jede einzelne Klasse der Durchflussmesser entwickelt und hergestellt werden. Ein weiterer Nachteil dieser Lösung besteht darin, dass die Unsicherheit der Durchflussmengenmessung der Gesamtströmung sowohl die Korrelationsfehler dieser Gesamtströmung mit dem einzelnen messfähigen Strömungswächter als auch die Summe der Unsicherheiten dieser einzelnen Strömungswächter einschließt.

In der CN102183274A und CN102735300A ist ein Durchflussmesser mit einem Gehäuse in Form einer Einschnittbaugruppe (eingebundener Rohrabschnitt) beschrieben. Diese Einschnittbaugruppe nimmt Strömungswächter auf, welche nach unterschiedlichen Messverfahren arbeiten, z. B. nach dem Wirbel- und Ultraschallmessverfahren. Eines der Messverfahren (Ultraschallmessung) sorgt für die Strömungsmessung mit einer niedrigen Geschwindigkeit (0,3 - 10 m/s). Das andere Verfahren (Wirbelmessverfahren) misst die Strömungsgeschwindigkeit im Bereich zwischen 5 und 45 m/s. Diese Lösung hat den Nachteil, dass die Strömungswächter aufeinanderfolgend an entgegengesetzten Enden der Einschnittbaugruppe eingebaut sind. Das verursacht eine Vergrößerung ihrer Längenmaße und eine platzraubende Konstruktion. Folglich können diese Messgeräte als Haushaltszähler nicht eingesetzt werden. Die Anordnung eines der Strömungswächter (des Wirbelströmungswächters) in der Mitte der Einschnittbaugruppe zwischen den Ultraschall-Strömungswächtern sorgt zwar für die Verminderung der Längenmaße der Konstruktion, bringt jedoch zusätzliche Strömungsstörungen in der Messstrecke ein. Das führt zu einer Verschlechterung der messtechnischen Eigenschaften des Zählers.

Die WO 2008/033035 A1 beschreibt eine Fluidgeschwindigkeitsmessvorrichtung, die in zwei gegenüberliegenden versetzt angeordneten Öffnungen eines Rohrleitungsabschnitts, in einem bestimmten Winkel zueinander und zum Strömungsfluss sowie im Wesentlichen außerhalb des Strömungsflusses, eingebaut ist. Dabei weist sie in jeder Öffnung einen Druckmesser und einen akustischen Sender / Empfänger auf, wobei eine Recheneinheit die Fluidgeschwindigkeit basierend auf den Messergebnissen von zwei Druckmessern und akustischen Sendern / Empfängern berechnet. Nachteilig erscheinen die Anordnung der Öffnungen in der Rohrleitung und ggf. der Messeinrichtungen darin und die dadurch entstehenden Verwirbelungen, die den homogenen Strömungsverlauf und damit die Messung beeinflussen. Eine den Gegebenheiten anpassbare Verwendung der Vorrichtung, insbesondere auch als Haushaltszähler, scheint aufgrund der baulichen Gegebenheiten schwierig und aufwändig zu sein.

Die US5433117 offenbart einen Ultraschallgaszähler mit einem Gehäuse mit einem Einlass und einem Auslass, einer zwischen dem Einlass und dem Auslass angeordneten Trennwand, die das Gehäuse unterteilt, einem im Querschnitt rechteckigen Messrohr, das die Trennwand durchsetzt und zwei einander gegenüberliegende Längsseiten/und zwei einander gegenüberliegende Querseiten sowie eine Einlassöffnung an einem Ende und eine Auslassöffnung am anderen Ende aufweist, zwei Ultraschallwandlern, von denen einer stromaufwärts der Einlassöffnung und der andere stromabwärts der Auslassöffnung des Messrohrs angeordnet ist und zwei Führungskanäle, die jeweils an einem Ende mit dem Einlass des Gehäuses und am anderen Ende mit der Einlassöffnung des Messrohrs verbunden sind und entlang einer der Längsseiten des Messrohrs verlaufen.

US20160282164 lehrt eine Messvorrichtung zum Bestimmen der Durchflussrate eines in einem Rohr in einer Hauptströmungsrichtung strömenden Fluids, umfassend eine Umlenkeinheit, die mit dem Rohr verbunden ist und dazu ausgelegt ist, die Fluidströmung von der Achse der Hauptströmungsrichtung in dem Rohr umzulenken und die Strömung zu einem Messabschnitt zu leiten, wobei die Umlenkeinheit einen Einlassabschnitt, der mit einem Einlassrohr verbunden ist, einen Auslassabschnitt, der mit einem Auslassrohr verbunden ist, und einen Umlenkabschnitt, der mit dem Einlassabschnitt und dem Auslassabschnitt verbunden ist, umfasst, wobei der Umlenkabschnitt ein dichtes Reservoir umfasst, ein röhrenförmiges Element, das zumindest teilweise in dem Umleitungsabschnitt und dem Auslassabschnitt angeordnet ist, wobei das röhrenförmige Element ein offenes Ende aufweist, an das der Messabschnitt angrenzt, wobei der Messabschnitt eine Fluiddurchflussmengenmesseinrichtung umfasst, wobei die Fluiddurchflussmengenmesseinrichtung innerhalb des röhrenförmigen Elements angeordnet ist, und einen Verbindungsabschnitt zum Verbinden des röhrenförmigen Elements mit dem Auslassrohr, wobei der Einlassabschnitt, der Auslassabschnitt und der Umleitungsabschnitt jeweils Querschnittsflächen aufweisen, die sich auf eine Querschnittsfläche des Rohrs von 1: 1 bis 4:1, wobei der Umleitungsabschnitt mindestens einen Strömungsdämpfer umfasst, der so konfiguriert ist, dass er das rohrförmige Element an Wänden des abgedichteten Behälters befestigt.

Die WO 2015/004254 offenbart einen Durchflussmesser zum Anschluss an einen koaxialen Durchflussmesserstutzen, wobei der Stutzen eine innere Stutzenwand umfasst, die ein ringförmiges Volumen, das mit einem von einem stromaufwärts und einem stromabwärts gelegenen Rohr einer Wasserversorgung verbunden ist, von einem zentralen Volumen trennt, das von dem ringförmigen Volumen umgeben ist und mit dem anderen von dem stromaufwärts und dem stromabwärts gelegenen Rohr verbunden ist, und eine Befestigungsanordnung zum Aufnehmen des Durchflussmessers entlang einer Installationsachse parallel zu einer Achse des ringförmigen Volumens, wenn der Durchflussmesser installiert ist, und zum Halten des Durchflussmessers relativ zu dem Stutzen, wobei der Durchflussmesser umfasst:
eine Durchflussmesskammer eine Strömungsführungsanordnung zum Führen der Strömung zwischen dem ringförmigen und dem zentralen Volumen durch die Strömungsmesskammer, wenn der Strömungsmesser mit dem Sockel verbunden ist, wobei die Strömungsführungsanordnung eine innere Zählerwand zum abdichtenden Zusammenpassen mit der inneren Stutzenwand umfasst, wenn der Durchflussmesser mit dem Stutzen verbunden ist, um einen ersten Strömungsweg zwischen dem ringförmigen Volumen und einem Ende der Durchflussmesskammer und einen zweiten Strömungsweg zwischen dem zentralen Volumen und einem anderen, gegenüberliegenden Ende der Durchflussmesskammer bereitzustellen, wobei der erste und der zweite Strömungsweg jeweils eine entsprechende erste und zweite Vielzahl von Strömungswegzweigen umfassen, die abwechselnd um die Innenwand der Messkammer herum verteilt sind, wobei jeder der ersten Vielzahl von Strömungswegzweigen zumindest teilweise zwischen benachbarten Zweigen der zweiten Vielzahl von Strömungswegzweigen angeordnet ist und jeder der zweiten Vielzahl von Strömungswegzweigen zumindest teilweise zwischen benachbarten Zweigen der ersten Vielzahl von Strömungswegzweigen angeordnet ist, wodurch der Einfluss der Ausrichtung des Strömungsmessers relativ zum Sockel um die Installationsachse auf das Strömungsverhalten innerhalb der Strömungsmesskammer reduziert wird.

Ausgehend von dem obigen Stand der Technik liegt der Erfindung die Aufgabe zugrunden, hier Abhilfe zu schaffen.

Diese Aufgabe wird durch den Fluiddurchflussmesser mit den Merkmalen der Ansprüche 1 und 6 gelöst.

Durch die Erfindung wird ein kompakter kleiner Großbereich-Fluiddurchflussmessers bereitgestellt, der neben der Anpassbarkeit auf einen bestimmten Messbereich auch in der Lage ist, einen größeren Messbereich als bisherige Durchflussmesser abzudecken.

Man erkennt, dass die Erfindung jedenfalls dann verwirklicht ist, wenn es sich um einen Fluiddurchflussmesser mit einer gemeinsamen Messstrecke für Strömungswächter mit unterschiedlichen Messverfahren für Strömungsgeschwindigkeit und Fluiddurchfluss handelt, der folgende Merkmale aufweist:
- einen Gehäuseinnenraum mit einer zur Geometrie des Strömungswächters komplementären Form, zwei den Innenraum zumindest teilweise begrenzende Böden und einen gewölbten Teil mit einer Geometrie, der eine Strömungsausbildung sicherstellt,
- mindestens einen Ultraschall-Strömungswächter, der so angeordnet ist, dass dessen Messstrecke durch einen Innenteil des weiteren Strömungswächters mit einer anderen Wirkungsweise läuft und
- eine Anpassungseinheit zur Anpassung verschiedener Durchmesser einer Austrittsöffnung des Strömungswächters und seines Auslasskanals.

Der kompakte Großbereich-Fluiddurchflussmesser mit einer Konfiguration zur Strömungsausbildung und einer gemeinsamen Messstrecke für Durchflussmesser mit unterschiedlichen Messverfahren ist dafür vorgesehen, Strömungsgeschwindigkeit und Fluiddurchfluss in einem großen Durchflussbereich mit einem Minimal-Maximal-Verhältnis des messbaren Durchflusses von 1:1000 und mehr zu messen. Dieser Durchflussmesser vereinigt die Vorteile des Zählers, dessen Konstruktion die Unempfindlichkeit gegen die Fluidstörungen am Einlass sicherstellt und des Durchflussmessers mit einem Messbereich, welcher die Messbereiche des bekannten Standes der Technik wesentlich überschreitet.

Weitere Verbesserungen ergeben sich aus den Merkmalen der Unteransprüche.

In einer ersten für die Funktion der Vorrichtung vorteilhaften Ausgestaltung mit den Merkmalen des Anspruchs 2, weist der Innenraum des Gehäuses eine zylindrische, eine elliptische oder eine quaderförmige Gestalt mit einem abgerundeten Boden auf. Dabei ist die Querschnittsfläche des Gehäuseinnenraums mehrfach größer (optimalerweise mindestens 10-mal größer) als die Querschnittsfläche des Einlasskanals des Durchflussmessers und er Austrittsöffnung des Strömungswächters. Dadurch fließt der ausgebildete, stabile und gleichmäßige Fluidstrom in Richtung des Auslasskanals und ist ein laminarer Fluidfluss erreicht.

In einer zweiten für die Funktion der Vorrichtung vorteilhaften Ausgestaltung mit den Merkmalen des Anspruchs 3, weist der Innenraum in der Mitte des Bodens mit der Abrundung entweder einen im Boden nach innen gewölbten Teil in Form einer Glocke oder einen in der Nähe des Bodens angeordneten gewölbten Teil der kugelförmig ist auf. Dadurch umfließt das Fluid beim Durchgang durch den Innenraum den gewölbten Teil entsprechend seiner Geometrie (Konfiguration) und läuft in der Mitte des Innenraums zur Eintrittsöffnung des Strömungswächters hin zusammen. Dabei fließt die gebildete Fluidströmung durch das Innere des Strömungswächters und tritt über einen Auslasskanal des Durchflussmessers hinaus, wodurch insgesamt ein laminarer Fluidfluss erreicht ist.

In einer dritten für die Erweiterung des Messbereichs der Vorrichtung vorteilhaften Ausgestaltung mit den Merkmalen des Anspruchs 4, ist ein erster Ultraschall-Strömungswächter innerhalb des gewölbten Teils und/oder ein zweiter Ultraschall-Strömungswächter im unteren Teil des Innenraums nach der Austrittsöffnung des Strömungswächters angeordnet. Dabei sind diese so angeordnet, dass ein akustischer Kanal über die Mittelachse des Strömungswächters läuft, wobei die Messstrecken der Strömungswächters sich überdecken und wodurch der Fluidfluss ungestört bleibt und der Messbereich erweitert ist.

In einer vierten für die Funktion und Konfiguration der Vorrichtung vorteilhaften Ausgestaltung mit den Merkmalen des Anspruchs 5, ist der Strömungswächter, der ein zur Strömungsgeschwindigkeit des Fluids proportionales Signal aufbereitet entlang der Mitte der Achse des Innenraums so angeordnet, dass die laminare Strömung durch ihn hindurchfließt und aus dem Auslasskanal des Durchflussmessers austritt. Dabei können als Strömungswächter beliebige bekannte Verdrängungs- oder Massenmesser für Durchflussmengen- oder Geschwindigkeitsmessungen beliebiger Funktionsweise eingesetzt werden, die der Baugröße des Innenraums des Gehäuses des Durchflussmessers entsprechen. Dadurch ist der laminare Fluidfluss und das wesentliche Messprinzip der Erfindung verwirklicht sowie die Konfiguration des Durchflussmessers auf den tatsächlichen Messzweck in der Produktion bzw. im praktischen Einsatz vereinfacht.

Erfindungsgemäß beruht die Verwendung der Vorrichtung mit erweitertem Messbereich nach Anspruch 6 auf der Anwendung von zwei unterschiedlichen Messverfahren. Dabei ist eines davon im unteren und das andere im oberen Teil des Durchflussmessbereichs besonders wirksam. Dadurch wird ein großer Messbereich mit einem Minimal-Maximal-Verhältnis des messbaren Durchflusses von 1:1000 und mehr erreicht, wobei die Anwendung von zwei Messverfahren es auch ermöglicht, die Funktion des Durchflussmessers zu prüfen. Dafür werden diese zwei Verfahren im mittleren Teil des Bereichs verglichen, in dem sich die nach den unterschiedlichen Verfahren erhaltenen Messergebnisse überlappen.

In einer fünften für die Erweiterung oder Verschiebung des Messbereichs der Vorrichtung vorteilhaften Ausgestaltung mit den Merkmalen des Anspruchs 7, bildet ein Rohr einen zusätzlichen Durchströmungs-Umlaufkanal, welcher zwischen der Außenfläche des Strömungswächters und der Innenfläche des zusätzlichen Rohres gebildet ist. Dadurch ist die Strömung des zu messenden Fluids aufgeteilt, wobei ein Teil der Strömung durch das Innere des Strömungswächters fließt und ein anderer Strömungsteil den Durchströmungs-Umlaufkanal passiert.

In einer sechsten für die Funktion und Konfiguration der Vorrichtung vorteilhaften Ausgestaltung mit den Merkmalen des Anspruchs 8, ist die Anpassungseinheit im Innenraum in der Mitte des Bodens des Gehäuses angeordnet, der dem Boden mit der Abrundung entgegengesetzt ist. Dadurch ist der laminare Fluidfluss verwirklicht sowie die Konfiguration des Durchflussmessers auf den tatsächlichen Messzweck in der Produktion bzw. im praktischen Einsatz vereinfacht.

In einer siebten für die Funktion der Vorrichtung vorteilhaften Ausgestaltung mit den Merkmalen des Anspruchs 9, ist eine Strömungsaufbereitungseinrichtung am Boden des Innenraums angeordnet und weist die Form eines Gitters auf. Dabei ist das Gitter am Boden des Innenraums so angeordnet, dass das zu messende Fluid durch den Einlasskanal und über die Strömungsaufbereitungseinrichtung fließt und in den Innenraum des Gehäuses des Durchflussmessers gelangt. Dabei zerschneidet die Strömungsaufbereitungseinrichtung die Gesamtströmung des zu messenden Fluids in zahlreiche Einzelströmungen und der laminare Fluidfluss ist verwirklicht.

In einer achten für die Sicherheit der Vorrichtung vorteilhaften Ausgestaltung mit den Merkmalen des Anspruchs 10, weist das Gehäuse einen Fluidleckage-Erkennungssensor auf, der in elektrischer Verbindung mit einem Elektronikmodul und/oder einem Sperrventil ist.

In einer neunten für die Funktion der Vorrichtung vorteilhaften Ausgestaltung mit den Merkmalen des Anspruchs 11, weist der Einlass des Strömungswächters eine trichterförmige Form auf und steht in fluidstrombildender Verbindung mit dem gewölbten Teil.

In einer zehnten für die Funktion der Vorrichtung vorteilhaften Ausgestaltung mit den Merkmalen des Anspruchs 12, sind der Strömungswächter und die Anpassungseinheit anpassbar, wobei die Anpassungseinheit entsprechend dem verwendeten Strömungswächter anpassbar ist.

In einer elften für die Funktion der Vorrichtung vorteilhaften Ausgestaltung mit den Merkmalen des Anspruchs 13, ist im Einlasskanal ein Grobfilter angeordnet.

Die Erfindung wird nachfolgend anhand eines Ausführungsbeispiels unter Bezugnahme auf die Zeichnungen näher erläutert.

Es zeigen:
- Fig. 1: das Schnittbild eines Fluiddurchflussmessers in einer ersten Ausführungsform mit der Konfiguration zur Strömungsausbildung und Strömungswächtern mit unterschiedlichen Messverfahren,
- Fig. 2: zeigt ein vereinfachtes Bild der gemeinsamen Messstrecke und den Weg des akustischen Kanals der Ultraschall-Strömungswächter,
- Fig. 3: stellt eine Ausgestaltung des Fluiddurchflussmessers in einer zweiten Ausführungsform als Einschnittbaugruppe dar.
- Fig. 4: zeigt eine Ausgestaltung des Fluiddurchflussmessers mit einem zusätzlichen Durchströmungs-Umlaufkanal für das zu messende Medium.

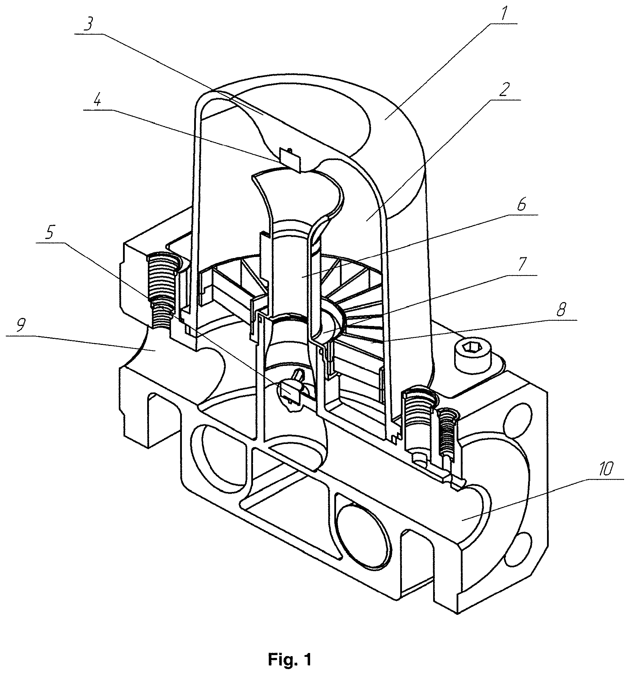

Beim kompakten Großbereich-Fluiddurchflussmesser mit der Konfiguration zur Strömungsausbildung und der gemeinsamen Messstrecke für Strömungswächter mit unterschiedlichen Messverfahren handelt es sich um eine Vorrichtung, die folgende Komponenten aufweisen kann (Fig. 1):
- ein Gehäuse 1 mit einem Innenraum 2 und einem nach innen gewölbten Teil 3 mit einer Konfiguration, welche die Strömungsausbildung sicherstellt;
- einen oder zwei Ultraschall-Strömungswächter 4, 5, die im Gehäuse des Durchflussmessers eingebaut und zur Messung der Fließgeschwindigkeit des Fluids vorgesehen sind;
- einen Strömungswächter 6 mit einer anderen Wirkungsweise (z. B. nach dem Hitzdraht-Messverfahren), der im Gehäuse 1 des Durchflussmessers eingebaut und zur Messung der Fließgeschwindigkeit des Fluids vorgesehen ist, wobei der Durchflussmesser 4 einen trichterförmigen Einlass aufweist;
- eine Anpassungseinheit 7, um verschiedene Durchmesser der Austrittsöffnung des Strömungswächters 6 und des Auslasskanals 10 des Durchflussmessers aneinander anzupassen;
- eine Strömungsaufbereitungseinrichtung 8, um die Strömung des messbaren Fluids zu durchschneiden und zu beruhigen (stabilisieren);
- einen Einlasskanal 9 für die Strömung des in den Durchflussmesser fließenden und zu messenden Fluids;
- einen Auslasskanal 10 für die Strömung des aus dem Durchflussmesser fließenden Fluids;
- ein Elektronikmodul;
- einen Grobfilter im Einlasskanal 9;
- ein Sperrventil im Einlasskanal 9;
- einen Fluidleckage-Erkennungssensor.

Bei dem Gehäuse 1 des Durchflussmessers handelt es sich um einen Behälter 2, der einen für das Fluid undurchlässigen (fluiddichten) Strömungsraum bildet. Dieser Innenraum (Innenkammer) 2 ist vorgesehen, um die Fluidströmung auszubilden und ihre Geschwindigkeit zu messen. Der Innenraum 2 des Gehäuse 1 weist eine zur Geometrie des Strömungswächters 6 komplementäre Form auf. Dieser kann beispielsweise in Form eines Zylinders, einer elliptischen Röhre, eines Quaders oder einer beliebigen anderen Form ausgebildet sein, wobei einer seiner Böden abgerundet ist. Wie in einem ersten Ausführungsbeispiel in Fig. 1 dargestellt, hat einer der Zylinderböden einen nach innen gewölbten Teil 3. Das Gehäuse 1 weist einen Haupteinlasskanal 9 und einen Hauptauslasskanal 10 auf. Der Haupteinlasskanal 9 fördert die Fluidströmung in den Innenraum 2. Der Hauptauslasskanal 10 ist für die aus dem Innenraum 2 fließende Fluidströmung vorgesehen. Im Gehäuse 1 ist eine Strömungsaufbereitungseinrichtung 8 fest eingebaut. Sie ist vorgesehen, um die Strömung des messbaren Fluids zu durchschneiden und zu beruhigen (stabilisieren). Das Gehäuse 1 nimmt des Weiteren einen oder zwei Ultraschall-Strömungswächter 4, 5 und einen Strömungswächter 6 mit einer anderen Wirkungsweise auf. Einer der Ultraschall-Strömungswächter befindet sich in einer Aufnahmestelle innerhalb des nach innen gewölbten Teils 3. Der zweite Ultraschall-Strömungswächter ist in einer Aufnahmestelle im unteren Teil des Innenraums 2 innerhalb der Anpassungseinheit 7 eingebaut. Der Strömungswächter 6 mit einer anderen Wirkungsweise sitzt in der Mitte des genannten Gehäuses 1 des Durchflussmessers. Das Elektronikmodul zur Auswertung der Messsignale, der Grobfilter zur Reinigung des Fluids, das Sperrventil zur Unterbrechung des Fluidflusses sowie der Fluidleckage-Erkennungssensor zur Erkennung eines Gefahrenfalles sind in Fig. 1 nicht dargestellt.

Der Durchflussmesser hat die folgende Funktionsweise:
- das messbare Fluid kommt zuerst in den Einlasskanal 9, strömt durch den Grobfilter, fließt durch die Strömungsaufbereitungseinrichtung 8 und wird in zahlreiche Strömungen aufgeteilt;
- die Strömungen verteilen sich über das gesamte Volumen des Innenraums 2, fließen seiner Mittenachse folgend von einem Boden zum anderen hin über den Raum entlang, der durch die Innenfläche der Wände des Gehäuses 1 und die Außenfläche des Strömungswächters 6 gebildet ist. Danach umströmen sie den nach innen gewölbten Teil 3, indem sie seiner Geometrie (Konfiguration) folgen. Am trichterförmigen Einlass des Strömungswächters 6 laufen sie zu einer ruhigen gleichmäßigen Einheitsströmung zusammen. Das stellt die günstigsten Bedingungen sicher, um eine hochpräzise Geschwindigkeitsmessung zu erreichen;
- danach wird die Strömung vom trichterförmigen Einlass des Strömungswächters 6 weiter gebündelt, wodurch auch ihre Strömungsgeschwindigkeit erhöht und die Störanfälligkeit der Messung im Strömungswächter 4 vermindert wird;
- anschließend fließt die Strömung durch das Innere des Strömungswächters 6 und tritt über den Auslasskanal 10 des Durchflussmessers hinaus;
- während die Fluidströmung durch das Innere des Strömungswächters 6 fließt, bereitet der Strömungswächter 6 ein Signal auf, das zur Strömungsgeschwindigkeit proportional ist.

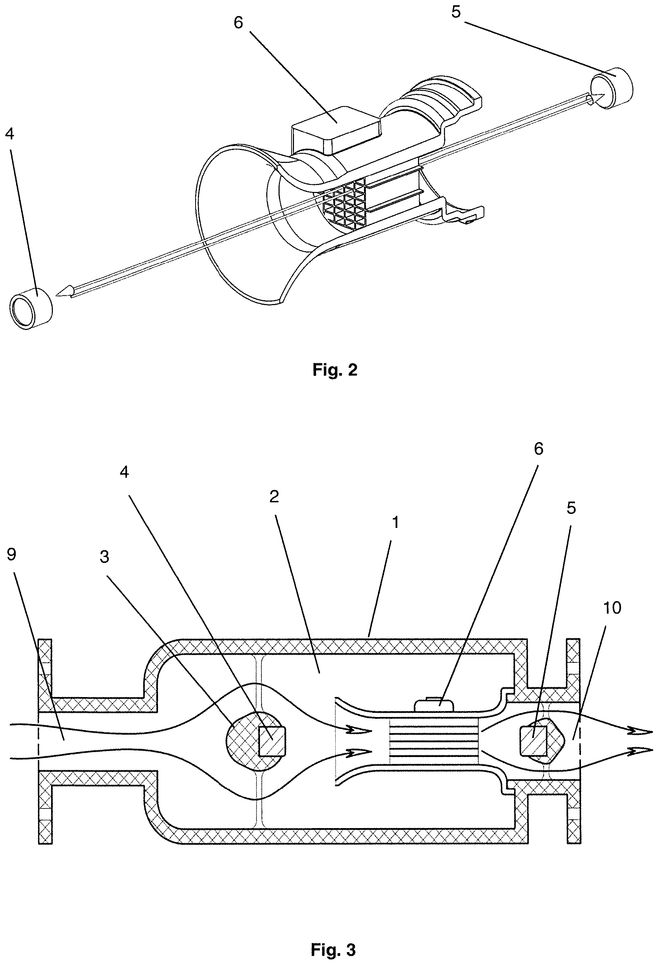

Eine kennzeichnende Besonderheit der Erfindung ist die Anwendung von Ultraschall-Strömungswächtern 4, 5. Einer 4 davon ist innerhalb des nach innen gewölbten Teils 3 eingebaut. Der Zweite 5 ist nach dem Strömungswächter 6 und zwar an seiner Austrittsöffnung angeordnet. Wesentlicher Unterschied zu herkömmlichen Durchflussmessern ist die Anordnung der Strömungswächter 4, 5 mit einer gemeinsamen Messstrecke, die durch den Innenteil des Strömungswächters 6 läuft, ohne seine Funktion zu beeinflussen (Fig. 2). Somit wird die räumliche Überdeckung des Messkanals der Ultraschall-Strömungswächter 4, 5 und des Messkanals des Strömungswächters 6 erreicht, so dass eine gemeinsame Messstrecke entsteht.

Die genannten Unterschiede stellen die kompakte Anordnung der Strömungswächter 4, 5, 6 im Innenraum 2 sicher. Folglich werden auch Kleinmaße des eigentlichen Durchflussmessers erreicht, wobei seine hohen messtechnischen Eigenschaften erhalten bleiben.

Die von den Strömungswächtern 4, 5 eingehenden Messsignale werden durch ein Elektronikmodul des Durchflussmessers empfangen und ausgewertet. Danach wird ein Signal erzeugt, welches zum Fluidstrom proportional ist.

Das Gehäuse 1 kann im Wesentlichen aus zwei Teilen bestehen (Fig. 1):
- einem festen Teil (Tragkörper), in dem sich der Einlasskanal 9, der Grobfilter, das Sperrventil, der Auslasskanal 10, die Strömungsaufbereitungseinrichtung 8, die Anpassungseinheit 7 und die Strömungswächter 4, 5, 6 befinden;
- einem Teil in Form eines Zylinders (einer Haube) mit einer Abrundung eines der Zylinderböden. Der Zylinder kann beweglich sein und ist dann um seine Mittenachse drehbar. An dem äußeren beweglichen Teil des Gehäuses 1 kann das Elektronikmodul befestigt werden, dessen Frontteil ebenfalls um seine Mittenachse drehbar ist.

Bei der Strömungsaufbereitungseinrichtung 8 kann es sich um ein Gitter handeln. In diesem Fall ist das Gitter im zylindrischen unteren Teil des Innenraums 2 so angeordnet, dass das messbare Fluid durch die Strömungsaufbereitungseinrichtung 8 über einen Einlasskanal 9 fließt und in den Innenraum 2 des Gehäuses 1 des Durchflussmessers eintritt. Bei dem Gitter der Strömungsaufbereitungseinrichtung 8 kann es sich um einen Satz von vorzugsweise 21 Schaufeln handeln, mit solchen Abmessungen, dass sie höchstens 23% der gesamten Querschnittsfläche des Innenraums 2 abdecken. Die Strömungsaufbereitungseinrichtung 8 sorgt für das Durchschneiden der Strömung des messbaren Fluids, schafft die Bedingungen für die Erzeugung einer ruhigen gleichmäßigen Strömung und vermindert somit beachtlich die Effekte, welche durch die Hochenergie der Turbulenzströmung am Einlass des Strömungswächters 6 bedingt sind. Die Anwendung der Strömungsaufbereitungseinrichtung 8 in Kombination mit der beschriebenen Konfiguration des Innenraums 2 gewährleistet die Beruhigung (Stabilisierung) der Strömung und den Ausgleich ihrer Geschwindigkeitskennlinie. Somit können äußere Einrichtungen (Adapter) entfallen, die ggf. dafür vorgesehen sind eine ungestörte Fluidströmung zu erzeugen.

Ein weiteres kennzeichnendes Merkmal des Durchflussmessers ist die Anpassungseinheit 7 im unteren Innenteil des Gehäuses (nach der Austrittsöffnung des Strömungswächters 6). Die Anpassungseinheit 7 dient dazu, die Durchmesser der Austrittsöffnung des Strömungswächters 6 und des Auslasskanals 10 des Durchflussmessers aneinander anzupassen. Diese Anpassungseinheit erlaubt es, je nach dem benötigten Bereich der messbaren Durchflussmengen im Durchflussmesser, Strömungswächter 6 mit verschiedenen Durchmessern anzuwenden, wobei die Anpassungseinheit auf den Strömungswächter anpassbar sein kann.

Beim Einlasskanal 9 für die Fluidströmung handelt es sich um eine Öffnung, einen Kanal, der die Fluidströmung in den Innenraum 2 des Gehäuses 1 des Durchflussmessers fördert.

Der Auslasskanal 10 ist vorgesehen, um die aus dem Innenraum 2 des Gehäuses 1 des Durchflussmessers fließende Fluidströmung abzuleiten.

Das Elektronikmodul dient zur Feststellung, Bearbeitung und Speicherung von Werten bzw. den Ergebnissen der Bearbeitung der Werte, die von Strömungswächtern 4, 5, 6 übermittelt werden und zur elektronischen Steuerung. Der Typ des Elektronikmoduls kann abhängig von Bedürfnissen der Realisierung variieren, und übt keinen wesentlichen Einfluss auf diese Erfindung aus. Das Elektronikmodul ist mit den Strömungswächtern 4, 5, 6 durch eine physikalische Datenleitung verbunden. Der Begriff "physikalische Datenleitung" bedeutet hier eine Verbindung mittels eines oder mehrerer Festkörperverbinder, z. B. Stecker, Verdrahtung, oder eine drahtlose Verbindung mittels Funk, z. B. WLAN, Bluetooth. Das Elektronikmodul kann sich auf der Außenseite des Gehäuses 1 des Zählers oder im Gehäuse befinden.

Im Einlasskanal 9 des Zählers kann sich ein Grobfilter befinden, der zur Reinigung des Fluids von Fremdstoffen dient, die den Durchflussmesser 4, 5, 6 oder die Strömungsaufbereitungseinrichtung 8 verschmutzen oder beschädigen können.

Weiterhin kann sich im Einlasskanal 9 ein Sperrventil befinden, das für das Schließen (Absperren) des Fluidstroms aufgrund eines Signals sorgt, das vom Elektronikmodul stammt.

Der ebenfalls optionale Fluidleckage-Erkennungssensor dient zur sicheren Feststellung der Fluidleckage aus dem Zähler, zum Auslösen des Sperrventils und damit zum Abbruch der Fluidzufuhr in den Zähler. Dieser Sensor ist von großer Bedeutung für die Sicherstellung der Betriebssicherheit von brennbaren Medien, deren Leckage zu einem Unfall mit schwerwiegenden Folgen führen kann. Die Feststellung einer Leckage und Absperrung des Fluidstroms kann aber auch unabhängig vom Fluiddurchflussmesser erfolgen.

Beim Strömungswächter 6 handelt es sich um ein Messgerät (Messgeber, Durchflussmesserröhrchen) zur Messung von Volumenstrom oder Strömungsgeschwindigkeit, das nach einer beliebigen Funktionsweise gebaut ist. Der Strömungswächter wird in der Mitte des zylindrischen Innenraums 2 des Gehäuses 1 des Durchflussmessers so angeordnet, dass das messbare Fluid über den Einlasskanal 9 und durch die Strömungsaufbereitungseinrichtung 8 fließt und in zahlreiche Strömungen zerschnitten wird. Dann fließt diese Strömung durch den Innenraum 2, umströmt den nach innen gewölbten Teil 3 und läuft zu einer ruhigen gleichmäßigen Einheitsströmung zusammen. Danach fließt diese Fluidströmung durch den Strömungswächter 6, durch den Auslasskanal 10 und tritt aus dem Durchflussmesser hinaus. Als Strömungswächter 6 können beliebige bekannte Verdrängungs- oder Massenmesser für Durchflussmengen- oder Strömungsgeschwindigkeitsmessungen eingesetzt werden (Turbinenzähler, Rotationszähler, anemometrische Messgeräte usw.), deren Baugrößen denen des Innenraums 2 des Gehäuses 1 des Durchflussmessers entsprechen. Daher bedarf ein solcher Strömungswächter 6 keiner weiteren detaillierten Beschreibung. In jedem Fall erkennt der Strömungswächter 6 die Kenngrößen, die auf die Menge des über die Rohrleitung bzw. durch den Durchflussmesser fließenden Fluids direkt oder indirekt hinweisen.

Gleichzeitig mit der Messung der Strömung durch den Strömungswächter 6, wird die Strömung nach dem Ultraschall-Verfahren gemessen. Die Ultraschall-Strömungswächter 4, 5 sind so angeordnet, dass deren akustischer Kanal über die Mittelachse des Strömungswächter 6 läuft, ohne seine Funktion zu beeinflussen (Fig. 2). Eine solche Anordnung der Ultraschall-Strömungswächter 4, 5 und des Strömungswächters 6 stellt eine Reihe von Vorteilen sicher: die günstigsten Bedingungen für die Messung nach dem Ultraschall-Verfahren, die kompakte Anordnung der Strömungswächter im Gehäuse des Durchflussmessers und folglich die Kleinmaße des eigentlichen Durchflussmessers. Dabei werden seine hohen messtechnischen Eigenschaften sichergestellt.

Die Umsetzung von zwei Messverfahren ermöglicht die Messungen von Strömungsgeschwindigkeit und Fluiddurchfluss in einem großen Durchflussbereich. So sorgt z. B. das Hitzdraht-Messverfahren für hochpräzise Messungen in Strömungsgeschwindigkeitsbereichen zwischen 0,03 und 0,5 m/s. Das Ultraschallverfahren kann die Durchflussmessungen in einem Geschwindigkeitsbereich zwischen 0,1 und 30 m/s sicherstellen. Somit kann das Minimal-Maximal-Verhältnis der messbaren Durchflüsse bis zu 1:1000 erreichen. Ein weiterer Vorteil der Umsetzung der zwei Verfahren ist die Möglichkeit, die nach verschiedenen Verfahren ermittelten Messdaten zu vergleichen. Das passiert im Mittelteil der Bereiche, wo beide Verfahren wirksam sind.

Die von den Strömungswächtern mit unterschiedlichen Messverfahren eingehenden Messsignale werden von einem Elektronikmodul des Durchflussmessers empfangen und ausgewertet. Danach wird ein Signal erzeugt, welches zum Fluidstrom proportional ist. Die Auswahl des Messverfahrens während der Arbeit des Durchflussmessers je nach Strömungsgeschwindigkeit sowie die Auswertung und die Aufnahme (Speicherung) der Messergebnisse erfolgen im Elektronikmodul des Durchflussmessers gemäß den darin gespeicherten Algorithmen.

Fig. 3 zeigt eine zweite Ausgestaltung des Großbereich-Durchflussmessers in einer Einschnittbaugruppe, wobei das Elektronikmodul, der Grobfilter, das Sperrventil, der Fluidleckage-Erkennungssensor sowie die Strömungsaufbereitungseinrichtung 8 und die Anpassungseinheit 7 im Übergang vom Einlasskanal 9 zum Innenraum 2 bzw. vom Innenraum 2 zum Auslasskanal 10 nicht dargestellt sind. Bei dieser Ausgestaltung wird eine Einschnittbaugruppe (ein Rohrleitungsstück mit Flanschen) als Gehäuse 1 eingesetzt. Diese Einschnittbaugruppe bildet den Innenraum 2. In der Mitte des Innenraums 2 befindet sich der kugelförmige gewölbte Teil 3, worin der Ultraschall-Strömungswächter 4 angeordnet ist. Der zweite Ultraschall-Strömungswächter 5 ist nach dem Strömungswächter 6 (im Sinn der Strömungsrichtung) und zwar an seiner Austrittsöffnung angeordnet. Die Wirkungsweise dieser Ausgestaltung des Durchflussmessers ist mit der Ausgestaltung gemäß Fig. 1 völlig identisch. Die messbare Strömung fließt über den Einlasskanal 9 in den Innenraum 2 hinein, dessen Durchmesser den des Einlasskanals 9 mehrfach überschreitet. Dabei wird sie von Strömungsaufbereitungseinrichtung 8 zerschnitten. Danach umströmt die Strömung den nach innen gewölbten Teil 3, passiert den Strömungswächter 6 und fließt über die Anpassungseinheit 7 durch den Auslasskanal 10 aus dem Durchflussmesser hinaus. Die Fluiddurchflussmessung kann nach einem der Verfahren je nach Strömungsgeschwindigkeit erfolgen.

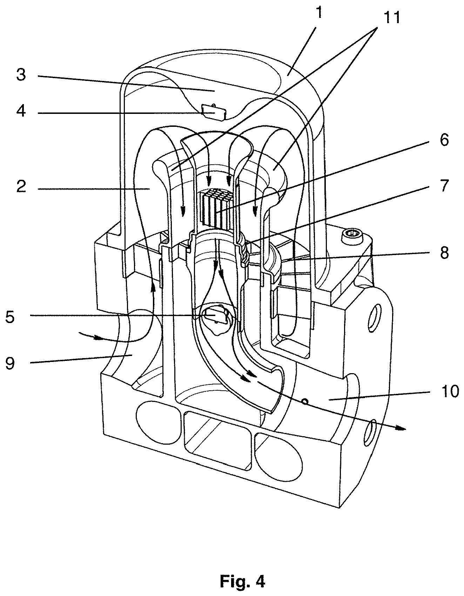

Fig. 4 zeigt eine Ausgestaltung des Großbereich-Durchflussmessers, wo der Strömungswächter 6 innerhalb eines zusätzlichen Rohres 11 angeordnet ist. Das Rohr 11 dient als Durchströmungs-Umlaufkanal für das messbare Fluid. Die Wirkungsweise dieser Ausgestaltung des Durchflussmessers und sein grundsätzlicher Aufbau sind ansonsten mit der Ausgestaltung gemäß Fig. 1 völlig identisch. Das Rohr 11 hat eine trichterförmige Öffnung, die der Öffnung des Strömungswächters 6 ähnlich ist.

Bei dieser Ausgestaltung des Messers kommt das messbare Fluid zuerst in den Einlasskanal 9. Danach tritt es in den Innenraum 2 ein, dessen Durchmesser um ein Vielfaches größer ist als der Durchmesser des Einlasskanals 9, fließt durch die Strömungsaufbereitungseinrichtung 8, dann entlang dem Raum, der durch die Innenfläche der Wände des Gehäuses 1 und die Außenfläche des Strömungswächters 6 gebildet ist, und umströmt den nach innen gewölbten Teil 3, indem es seiner Geometrie (Form) folgt. Danach spaltet sich die Fluidströmung auf. Ein Teil der Strömung, wie es auch in der vorherigen Ausgestaltung der Fall ist, fließt durch das Innere des Strömungswächters 6 und tritt über den Auslasskanal 10 des Durchflussmessers hinaus. Der andere Teil der Strömung fließt über den zusätzlichen Umlaufkanal. Bei diesem Umlaufkanal handelt es sich um einen Raum, welcher zwischen der Außenfläche des Strömungswächters 6 und der Innenfläche des zusätzlichen Rohres 11 gebildet ist. Dieser zusätzliche Umlaufkanal ist dann vorteilhaft, wenn der Bereich der zu messenden Strömung entweder wesentlich erweitert oder verschoben sein muss, ohne dass die Baugröße des Strömungswächters 6 und die Konstruktion der Durchflussrohre verändert wird.

Als zusätzliche alternative Ausgestaltungen des Großbereich-Fluiddurchflussmessers sind folgenden Ausführungen möglich:
- Durchflussmesser, in dem zwei gleiche Durchflussmessverfahren eingesetzt werden;
- eine vereinfachte Ausführung mit nur einem Verfahren zur Messung der Strömungsgeschwindigkeit. In diesem Fall wird ein hohles Rohr mit der gleichen Form (Konfiguration) wie beim Strömungswächter 6 eingebaut.

Solche vereinfachten Ausgestaltungen sind möglich, wenn der Verbraucher keinen großen Durchflussmessbereich benötigt.

Die Erfindung hat folgende Vorteile:
- das Vorhandensein des entweder nach innen gewölbten Teils 3 in der Mitte eines der Böden oder des in der Nähe eines der Böden angeordneten gewölbten, kugelförmigen Teils 3 innerhalb des Innenraums 2 des Fluidzählers stellt dank seiner Geometrie (Glocken-, Kugel- oder Tropfenform) die Ausbildung der homogenen Strömung in Zentralbereich des Innenraums 2 am Eintritt des Durchflussmesser 6 sowie die Erhöhung der Bewegungsgeschwindigkeit der Strömung sicher;
- das Vorhandensein der Anpassungseinheit 7 ermöglicht es einen Volumenstrommesser oder einen Geschwindigkeitsmesser beliebigen Fabrikats mit einer beliebigen Wirkungsweise und mit verschiedenen Anschlußmaßen als Durchflussmesser 6 einzusetzen;
- die Anwendung von Durchflussmessern 6, die nach verschiedenen Messverfahren (Wirkungsweisen) funktionieren, ermöglicht die Wahl solcher Baugrößen der Durchflussmessers 6, die eine große Querschnittsfläche des Innenraums 2 sicherstellen;
- eine große Querschnittsfläche des Innenraums 2 sorgt für unbedeutende Fluiddruckverluste im Zähler;
- da die Querschnittsfläche des Innenraums 2 des Durchflussmessers mehrfach (optimalerweise mindestens 10-mal) die des Einlasskanals 9 des Zählers und der Eintrittsöffnung des Durchflussmessers 6 überschreitet, vermindert die Strömung des zu messenden Mediums seine Bewegungsgeschwindigkeit wesentlich, nachdem es über die Einlasskanal 9 in den Innenraum 2 gelangt. Im Endeffekt wird die Strömung gleichmäßiger und ruhiger. Danach fließt die Strömung durch den Durchflussmesser, dessen Durchmesser mehrfach kleiner als der Durchmesser des Innenraums 2 ist, und erhöht seine Bewegungsgeschwindigkeit. Das schafft günstigere Bedingungen für hochpräzise Messungen der Strömungsgeschwindigkeit und vermindert zusätzlich den Einfluss der äußeren Störfaktoren. Der Strömungsmesser wird dadurch nahezu vollständig unempfindlich gegenüber Strömungsstörungen in der Rohrleitung, die durch lokale Widerstände erzeugt werden;
- da der beanspruchte Durchflussmesser Strömungswächter 4, 5, 6 mit zwei unterschiedlichen Fluiddurchflussmessverfahren und mit einer gemeinsamen Messstrecke aufweist, die innerhalb des Innenraums 2 kompakt angeordnet sind, wird ein großer Messbereich mit einem Minimal-Maximal-Verhältnis des messbaren Durchflusses von 1:1000 und mehr erreicht.

Der Durchflussmesser für Flüssigkeiten und Gase mit einem wesentlich erweiterten Messbereich ist somit das Ergebnis der vorliegenden Erfindung. Dieser Durchflussmesser stellt hohe messtechnische Eigenschaften sicher. Dabei ist der Durchflussmesser kompakt gestaltet, weist kleine Abmessungen auf und ist gegen Störungen des messbaren Fluids am Einlass unempfindlich. Die Anwendung von zwei Messverfahren (Messprinzipien) macht es auch möglich die Funktion des Durchflussmessers zu prüfen. Dafür werden diese zwei Verfahren im mittleren Teil des Bereichs verglichen, wo die nach unterschiedlichen Verfahren erhaltenen Messergebnisse sich überlappen. Das stellt eine höhere Sicherheit der Messdaten sicher.

## Patentansprüche

1. Fluiddurchflussmesser mit einer Messstrecke für Strömungswächter (4, 5, 6) mit unterschiedlichen Messverfahren für Strömungsgeschwindigkeit und Fluiddurchfluss, der ein Gehäuse (1) mit einem Einlasskanal (9), einem Auslasskanal (10) und mindestens zwei Strömungswächter (4, 5, 6) darin aufweist,
**dadurch gekennzeichnet,**
**dass** ein Gehäuseinnenraum (2) eine zur Geometrie des Strömungswächters (6) komplementäre Form, zwei den Innenraum (2) zumindest teilweise begrenzende Böden und einen gewölbten Teil (3) mit einer Geometrie aufweist, der eine Strömungsausbildung sicherstellt,
**dass** mindestens ein Ultraschall-Strömungswächter (4, 5) so angeordnet ist, dass dessen Messstrecke durch einen Innenteil des weiteren Strömungswächters (6) mit einer anderen Wirkungsweise läuft und
**dass** der Fluiddurchflussmesser eine Anpassungseinheit (7) zur Anpassung verschiedener Durchmesser einer Austrittsöffnung des Strömungswächters (6) und seines Auslasskanals (10) aufweist.

2. Fluiddurchflussmesser nach Anspruch 1,
**dadurch gekennzeichnet,**
**dass** der Innenraum (2) des Gehäuses (1) die Form eines Zylinders, einer elliptischen Röhre oder eines Quaders mit einer Abrundung eines seiner Böden aufweist und
**dass** die Querschnittsfläche des Innenraums (2) dabei mehrfach größer als die Querschnittsfläche des Einlasskanals (9) des Durchflussmessers und der Austrittsöffnung des Strömungswächters (6) ist.

3. Fluiddurchflussmesser nach Anspruch 2,
**dadurch gekennzeichnet,**
**dass** der Innenraum (2) in der Mitte des Bodens mit der Abrundung entweder einen im Boden nach innen gewölbten Teil (3) in Form einer Glocke oder einen in der Nähe des Bodens angeordneten gewölbten Teil (3), der kugelförmig ist, aufweist.

4. Fluiddurchflussmesser nach Anspruch 1,
**dadurch gekennzeichnet,**
**dass** ein erster der mindestens einen Ultraschall-Strömungswächter (4) innerhalb des gewölbten Teils (3) angeordnet ist und/oder sich ein zweiter der mindestens einen Ultraschall-Strömungswächter (5) im unteren Teil des Innenraums nach der Austrittsöffnung des Strömungswächters (6) befindet und
**dass** der/die Ultraschall-Strömungswächter (4, 5) dabei so angeordnet ist/sind, dass ein akustischer Kanal über die Mittelachse des Strömungswächters (6) läuft.

5. Fluiddurchflussmesser nach Anspruch 1,
**dadurch gekennzeichnet,**
**dass** der Strömungswächter (6) ein Signal aufbereitet, das zur Strömungsgeschwindigkeit proportional ist,
**dass** der Strömungswächter (6) entlang der Mitte der Achse des Innenraums (2) angeordnet ist und
**dass** als Strömungswächter (6) beliebige bekannte Verdrängungs- oder Massenmesser für Durchflussmengen- oder Strömungsgeschwindigkeitsmessungen beliebiger Funktionsweise eingesetzt werden können, deren Baugrößen denen des Innenraums (2) entsprechen.

6. Verwendung eines Fluiddurchflussmessers nach Anspruch 1,
**dadurch gekennzeichnet,**
**dass** seine Wirkungsweise auf Anwendung von zwei unterschiedlichen Messverfahren beruht, wobei eines davon im unteren und das andere im oberen Teil des Durchflussmessbereichs besonders wirksam ist,
**dass** dadurch ein großer Messbereich mit einem Minimal-Maximal-Verhältnis des messbaren Durchflusses von 1:1000 und mehr erreicht wird und
**dass** die Anwendung von zwei Messverfahren es auch ermöglicht, die Funktion des Durchflussmessers zu prüfen, wofür diese zwei Verfahren im mittleren Teil des Bereichs verglichen werden, in dem sich die nach den unterschiedlichen Verfahren erhaltenen Messergebnisse überlappen.

7. Fluiddurchflussmesser nach Anspruch 1,
**dadurch gekennzeichnet,**
**dass** ein Rohr (11) einen zusätzlichen Durchströmungs-Umlaufkanal bildet, welcher zwischen der Außenfläche des Strömungswächters (6) und der Innenfläche des zusätzlichen Rohres (11) gebildet ist, wodurch die Strömung des zu messenden Fluids aufgeteilt ist, wobei ein Teil der Strömung durch das Innere des Strömungswächters (6) fließt und ein anderer Strömungsteil den Durchströmungs-Umlaufkanal passiert.

8. Fluiddurchflussmesser nach Anspruch 2,
**dadurch gekennzeichnet,**
**dass** die Anpassungseinheit (7) im Innenraum (2) in der Mitte des Bodens des Gehäuses (1) angeordnet ist, der dem Boden mit der Abrundung entgegengesetzt ist.

9. Fluiddurchflussmesser nach Anspruch 1,
**dadurch gekennzeichnet,**
**dass** eine Strömungsaufbereitungseinrichtung (8) am Boden des Innenraums (2) angeordnet ist und
**dass** die Strömungsaufbereitungseinrichtung (8) die Form eines Gitters aufweist.

10. Fluiddurchflussmesser nach einem der vorherigen Ansprüche 1-5 oder 7-9,
**dadurch gekennzeichnet,**
**dass** das Gehäuse (1) einen Fluidleckage-Erkennungssensor aufweist, der in elektrischer Verbindung mit einem Elektronikmodul und/oder einem Sperrventil ist.

11. Fluiddurchflussmesser nach einem der vorherigen Ansprüche 1-5 oder 7-10,
**dadurch gekennzeichnet,**
**dass** der Einlass des Strömungswächters (6) eine trichterförmige Form aufweist und in fluidstrombildender Verbindung mit dem gewölbten Teil (3) steht.

12. Fluiddurchflussmesser nach einem der vorherigen Ansprüche 1-5 oder 7-11,
**dadurch gekennzeichnet,**
**dass** der Strömungswächter (6) und die Anpassungseinheit (7) anpassbar sind, wobei die Anpassungseinheit (7) entsprechend dem verwendeten Strömungswächter (6) anpassbar ist.

13. Fluiddurchflussmesser nach einem der vorherigen Ansprüche 1-5 oder 7-12,
**dadurch gekennzeichnet,**
**dass** im Einlasskanal (9) ein Grobfilter angeordnet ist.

## Claims

1. A fluid flow meter with a measured distance for flow sensors (4, 5, 6), with various measuring processes for determination of the flow velocity and flow rate of the medium, which has the body (1) with an inlet (9), an outlet (10) and at least two flow sensors (4, 5, 6) inside
is **characterized in**
**that** the inner chamber of the body (2) has the shape complementary to the geometry of the flow sensor (6), two limiting bases which at least partially limit the inner chamber (2) and one fairing (3) with the geometry, which provides flow formation,
**that** at least one ultrasonic flow sensor (4, 5) is positioned so that its control channel passes through the inner part of an additional flow sensor (6) of different operating principle, and
**that** the flow meter has an adapter (7) for adapting different diameters to the outlet of the flow sensor (6) and its outlet channel (10).

2. A fluid flow meter according to formula 1
is **characterized in**
**that** an inner chamber (2) of the body (1) follows the shape of a cylinder, elliptical tube or rectangular parallelepiped, one of the bases of which is rounded, and
**that** the cross-sectional area of the inner chamber (2) at the same time is many times larger than the cross-sectional area of the inlet channel (9) of the flow meter and the outlet of the flow sensor (6).

3. A fluid flow meter according to formula 2
is **characterized in**
**that** the inner chamber (2) has, in the central part of the rounded base, either a bellshaped fairing (3) or a spherical fairing (3) located next to the base.

4. A fluid flow meter according to formula 1
is **characterized in**
**that** the first of at least one ultrasonic flow sensor (4) is located inside the fairing and/or the second of at least one ultrasonic flow sensor (5) is located in the lower part of the inner chamber after the outlet of the flow sensor (6), and
**that** the ultrasonic flow sensor(s) (4,5) at the same time is(are) positioned so that the acoustic channel passes through the central axis of the flow sensor (6).

5. A fluid flow meter according to the claim 1
is **characterized in**
**that** the flow sensor (6) prepares a signal which is proportional to the flow rate,
**that** the flow sensor (6) is located along the center of the axis of the inner chamber (2), and
**that** it is allowed to use as a flow sensor (6) any known flow meters of the volumetric or mass principle of operation that correspond to the design the size of the inner chamber (2).

6. The use of a fluid flow meter according to the claim 1
is **characterized in**
**that** its operation mode is based on the application of two different measuring principles, while one of them is particularly effective in the lower section of the flow range, and the other one - in the upper section of the flow range,
**that** thereby a wide measurement range is obtained with the ratio of the minimum measured flow rate to the maximum 1:1000 and more,
**that** the use of two measurement methods also allows controlling the function of the flow meter, for which these two methods are compared in the middle section of the flow range, where the measurement results determined by these different methods overlap.

7. A fluid flow meter according to the claim 1
is **characterized in**
**that** the pipeline (11) forms an additional flow bypass channel, which is formed between the outer surface of the flow sensor (6) and the inner surface of the additional pipeline (11), due to which the flow of the measured fluid is separated, while one part of the flow passes through the inner space of the flow sensor (6) and the other part of the stream passes through the flow bypass channel.

8. A fluid flow meter according to claim 2
is **characterized in**
**that** the adapter (7) in the inner chamber (2) is located in the center of the base of the body (1), which is located opposite the rounded base.

9. A fluid flow meter according to claim 1
is **characterized in**
**that** a flow preparation device (8) is located on the base of the inner chamber (2), and that a flow preparation device (8) has the form of a grid.

10. A fluid flow meter according to one of the previous claims 1-5 or 7-9
is **characterized in**
**that** inside the body (1) has a receptor sensor for fluid leaks, which is in electrical connection to the electronic unit and / or the shut-off valve.

11. A fluid flow meter according to one of the previous claims 1-5 or 7-10
is **characterized in**
**that** the inlet of the flow sensor (6) is funnel-shaped and is in the fluid-forming connection with the fairing (3).

12. A fluid flow meter according to one of the previous claims 1-5 or 7-11
is **characterized in**
**that** the flow sensor (6) and adapter (7) are adaptable, while the adapter is adaptable in accordance with the used flow sensor (6).

13. A fluid flow meter according to one of the previous claims 1-5 or 7-12
is **characterized in**
**that** inside the inlet channel (9) a coarse filter is installed.

## Revendications

1. Débitmètre de fluide avec une plage de mesure pour capteurs de débit (4, 5, 6), avec plusieurs processus de mesure pour déterminer la vitesse d'écoulement et le débit du fluide, qui comporte le boîtier (1) avec un une entrée (9), une sortie (10) et au moins deux capteurs de débit (4, 5, 6) à l'intérieur,
est **caractérisé en ce**
**que** le boîtier intérieur (2) a une forme complémentaire au géométrie du capteur de débit (6), deux étages qui, au moins, délimitent partiellement le boîtier intérieur (2) et un carénage (3) dont la géométrie assure la formation de flux,
**que** au moins un capteur de débit ultrasonique (4, 5) est positionné de sorte que son canal de commande traverse l'intérieur d'un capteur de débit supplémentaire (6) de principe de fonctionnement différent, et
**que** le débitmètre comporte un adaptateur (7) pour adapter différents diamètres à la sortie du capteur de débit (6) et à son canal de sortie (10).

2. Un débitmètre de fluide selon la formule 1
est **caractérisé en ce**
**que** la chambre intérieure (2) du boîtier (1) a la forme d'un cylindre, d'un tube elliptique ou d'un parallélépipède rectangle dont l'une des bases est arrondie, et
**que** la section transversale de la chambre intérieure (2) est en même temps plusieurs fois plus grande que la section transversale du canal d'entrée (9) du débitmètre et de la sortie du capteur de débit (6),

3. Un débitmètre de fluide selon la formule 2
est **caractérisé en ce**
**que** la chambre intérieure (2) présente, dans la partie centrale de la base arrondie, soit un carénage (3) en forme de cloche, soit un carénage sphérique (3) situé à côté de la base.

4. Un débitmètre de fluide selon la formule 1
est **caractérisé en ce**
**qu'**au moins le premier capteur de débit ultrasonique (4) est situé à l'intérieur du carénage et/ou le deuxième capteur de débit ultrasonique (5) est situé au fond de la chambre intérieure après la sortie du capteur de débit (6), et
**que** le(s) capteur(s) de débit ultrasonique(s) (4, 5) en même temps est(sont) positionné(s) de sorte que le canal acoustique passe par l'axe central du capteur de débit (6),

5. Un débitmètre de fluide selon la formule 1
est **caractérisé en ce**
**que** le capteur de débit (6) prépare un signal proportionnel au débit du fluide,
**que** le capteur de débit (6) est situé le long du centre de l'axe de la chambre intérieure (2), et
**qu'**il est permis d'utiliser comme les capteurs de débit (6) n'importe quel débitmètre ou compteur de vitesse d'écoulement connu du principe de fonctionnement volumétrique ou massique qui correspond à la conception la taille de la chambre intérieure (2).

6. L'utilisation d'un débitmètre de fluide selon la formule 1
est **caractérisé en ce**
**que** son mode de fonctionnement est basé sur l'application de deux principes de mesure différents, tandis que l'un d'eux est particulièrement efficace dans la partie inférieure de la plage de débit, et l'autre - dans la partie supérieure de la plage de débit,
**que** de cette façon, une large plage de mesure est obtenue avec le rapport du débit minimum mesurable au maximum 1:1000 et plus,
**que** l'utilisation de deux méthodes de mesure permet également de contrôler les fonctions du débitmètre, pour lequel ces deux méthodes sont comparées dans la partie médiane de la plage de débit, où les résultats de mesure déterminés par ces différentes méthodes se recoupent.

7. Un débitmètre de fluide selon la formule 1
est **caractérisé en ce**
**que** la conduite tuyaux (11) forme un canal de dérivation de flux supplémentaire, qui est formé entre la surface extérieure du capteur de débit (6) et la surface intérieure de la conduite supplémentaire (11), grâce à laquelle l'écoulement du fluide mesuré est séparé, tandis qu'une partie du flux s'écoule à travers l'espace intérieur du capteur de débit (6) et l'autre partie du flux s'écoule à travers la dérivation de flux supplémentaire,

8. Un débitmètre de fluide selon la formule 2
est **caractérisé en ce**
**que** l'adaptateur (7) dans la chambre intérieure (2) est situé au centre de la base du boîtier (1), qui est située en face de la base arrondie,

9. Un débitmètre de fluide selon la formule 1
est **caractérisé en ce**
**que** le dispositif de préparation de flux (8) est situé sur le fond de la chambre intérieure (2), et
un dispositif de préparation de flux (8) a une la forme d'une grille.

10. Un débitmètre de fluide selon l'une des formules précédentes 1-5 ou 7-9
est **caractérisé en ce**
**qu'**à l'intérieur le boîtier (1), comporte un capteur récepteur de fuites de fluide, lequel est connecté électriquement à l'unité électronique et/ou à la vanne d'arrêt.

11. Un débitmètre de fluide selon l'une des formules précédentes 1-5 ou 7-10
est **caractérisé en ce**
**que** l'entrée du capteur de débit (6) est en forme d'entonnoir et est en liaison fluide avec le carénage (3).

12. Un débitmètre de fluide selon l'une des formules précédentes 1-5 ou 7-1 1
est **caractérisé en ce**
**que** le capteur de débit (6) et l'adaptateur (7) sont appariés, tandis que l'adaptateur est apparié conformément au capteur de débit utilisé (6),

13. Un débitmètre de fluide selon l'une des formules précédentes 1-5 ou 7-12
est **caractérisé en ce**
**qu'**à l'intérieur du canal d'admission (9) se trouve un filtre grossier.
